# DEMANDE DE BREVET EUROPEEN

(11) **EP 1 107 542 A1**
(43) Date de publication de la demande: **13.06.2001**
(21) Numéro de dépôt: 00403415.3
(22) Date de dépôt: 06.12.2000
(51) Int. Cl.: H04M 1/02

(54) **Téléphone mobile avec le haut parleur sur la face arrière**

(30) Priorité: 07.12.1999 FR 9915403
(71) Demandeur: SAGEM S.A., 75116 Paris (FR)
(72) Inventeur: Romao, Fernando, 78360 Montesson (FR)
(74) Mandataire: Bloch, Gérard

(57) **Abrégé**

Le poste téléphonique cellulaire compact comporte un haut-parleur (3), un d'afficheur (4) et une carte support de circuit imprimé (6), le haut-parleur (3) et l'afficheur (4) étant disposés de part et d'autre de la carte (6) et sensiblement au droit l'un de l'autre, un conduit acoustique (9) reliant le haut-parleur (3) à la face avant (2) du boîtier du poste.

## Description

L'invention concerne un poste téléphonique de réseau cellulaire.

Pour la commodité de l'utilisation et du transport de tels postes, les fabricants cherchent à en augmenter la compacité et en particulier à en réduire la longueur, ou la hauteur, et l'épaisseur.

Cette hauteur est déterminée par les dimensions d'une succession de circuits de relations homme-machine (RHM) accessibles en face avant, c 'est-à-dire les circuits phoniques, microphone et haut-parleur, respectivement en bas et en haut du boîtier et les circuits de commande/visualisation, clavier et écran, qui s'étendent dans la zone centrale:

Toute réduction de la taille du clavier et de l'écran dégraderait de façon inacceptable le confort d'utilisation. De même, la qualité de restitution sonore à assurer interdit de réduire la taille du haut-parleur.

Pour réduire cette hauteur de poste, on a songé à disposer l'écran et le haut-parleur, non l'un à côté de l'autre, mais en partie l'un sur l'autre, en descendant le haut-parleur sous l'écran, ce qui est naturellement préjudiciable quant à l'épaisseur du terminal.

La présente invention offre une solution au problème ci-dessus de compacité.

A cet effet, l'invention concerne un poste téléphonique cellulaire compact comportant un haut-parleur, des moyens d'affichage et une carte support de circuit imprimé, caractérisé par le fait que le haut-parleur et les moyens d'affichage sont disposés de part et d'autre de la carte et sensiblement au droit l'un de l'autre.

La face avant peut donc être quasiment réservée aux moyens de commande/visualisation et peut ainsi avoir une hauteur très limitée et/ou comporter des moyens de commande/visualisation de taille accrue. La demanderesse a finalement proposé son invention grâce au fait d'avoir osé disposer des composants RHM des deux côtés de la carte de circuit imprimé.

Dans la forme de réalisation effective, un conduit acoustique relie le haut-parleur à la face avant du boîtier du poste.

Le haut-parleur est ainsi couplé acoustiquement avec l'extérieur dans la zone appropriée du boîtier du poste.

L'invention sera mieux comprise à l'aide de la description suivante d'une forme de réalisation préférée du terminal téléphonique de l'invention, en référencé au dessin annexé, sur lequel :
- la figure 1 est une vue de face représentant les constituants d'un poste téléphonique cellulaire selon l'invention, certains vus par transparence,
- la figure 2 est une vue latérale en coupe longitudinale du poste de la figure 1, et
- la figure 3 est une vue transversale, en coupe III-III, du poste de la figure 2.

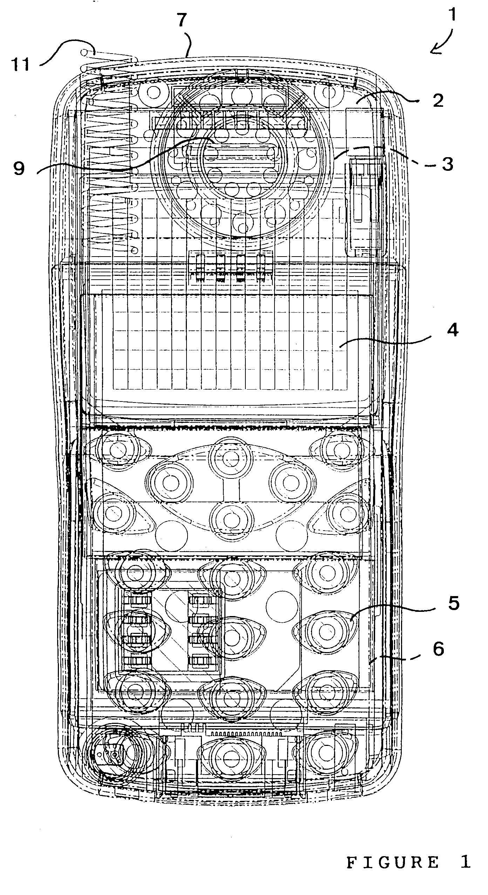

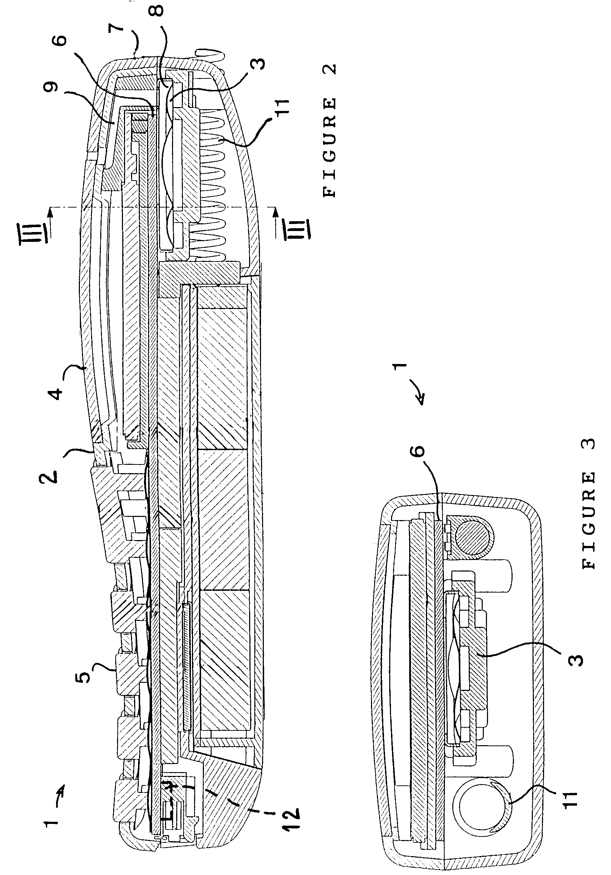

Le poste téléphonique sans fil représenté est ici un poste pour le réseau de radiotéléphonie cellulaire GSM. Il est sensiblement de forme parallélépipédique rectangle et, comme le montre la figure 1, il comporte un boîtier 1 dont la face avant 2 porte un clavier 5, en partie basse, et un afficheur ou écran 4 en partie haute, juste au-dessus du clavier 5. A l'intérieur du boîtier 1, à distance de la face avant 2, se trouvent une antenne filaire 11, faisant légèrement saillie de la face d'extrémité supérieure 7 du boîtier 1, et un haut-parleur ou écouteur 3 dont la membrane est associée à un volume acoustique 8 (fig. 2) qui débouche à l'extérieur du boîtier 1, en face avant 2, à travers un conduit acoustique 9 de couplage à l'air ambiant. Une carte support de circuit imprimé 6 s'étend sensiblement parallèlement à la face avant 2 pour porter, du côté de celle-ci, le clavier 5 et l'écran 4, qui occupent sensiblement toute la largeur du boîtier 1, et, de l'autre côté, le haut-parleur 3 et l'antenne 11.

Comme le montre la figure 2, le haut-parleur 3 est disposé sensiblement au droit de l'écran 4, avec toutefois, dans cet exemple, un débordement du haut-parleur 3 vers la face d'extrémité supérieure 7. Plus précisément, le haut-parleur 3 déborde en haut de la carte 6 qui le porte et le conduit acoustique 9 relie la partie débordante du haut-parleur 3 à la face avant 2, où il débouche dans une zone située juste au-dessus de l'écran 4, en considérant que la partie dite haute du poste est à droite sur la figure 2. Le conduit 9 présente une forme coudée pour relier la partie débordante du haut-parleur 3, qui atteint pratiquement la face d'extrémité supérieure 7, à la zone de débouché, plus basse, au droit de la carte 6. Le haut-parleur 3 étant plaqué sur la face inférieure de la carte 6 au niveau de la périphérie de sa face avant, le volume acoustique 8 est en fait limité, d'un côté, par la carte 6 et, de l'autre côté, par la membrane du haut-parleur 3, montée en retrait et présentant une forme de dôme entouré d'un anneau de forme partiellement torique, comme le montre la figure 2. Le conduit 9 prend naissance au droit de l'anneau ci-dessus.

Comme le montre la figure 3, l'antenne 11 est associée au haut-parleur 3, du même côté de la carte 6. De ce fait, comme le haut-parleur 3 n'occupe qu'une partie de la largeur du boîtier 1, l'antenne 11, s'étendant selon la longueur du boîtier 1, est logée à côté du haut-parleur 3, ce qui évite tout surcroît d'épaisseur du boîtier 1.

Incidemment, on pourrait vouloir aussi disposer le microphone 12 comme le haut-parleur 3, c'est-à-dire du même côté de la carte 6 que celui-ci, avec un conduit acoustique débouchant sur la face avant 2, à l'autre bout du boîtier 1 (figure 2).

Ainsi, l'écran 4, la carte 6 et le haut-parleur 3 avec l'antenne 11 et éventuellement le microphone 12 forment un empilage d'éléments s'étendant sensiblement dans des plans parallèles, ce qui permet d'obtenir la compacité recherchée, par la limitation de la longueur et de l'épaisseur du boîtier 1.

## Revendications

1. Poste téléphonique cellulaire compact comportant un haut-parleur (3), des moyens d'affichage (4) et une carte support de circuit imprimé (6), caractérisé par le fait que le haut-parleur (3) et les moyens d'affichage (4) sont disposés de part et d'autre de la carte (6) et sensiblement au droit l'un de l'autre.

2. Poste téléphonique selon la revendication 1, dans lequel un conduit acoustique (9) relie le haut-parleur (3) à la face avant (2) du boîtier du poste.

3. Poste téléphonique selon l'une des revendications 1 et 2, dans lequel une antenne (11) est associée au haut-parleur (3), du même côté de la carte (6).

4. Poste selon la revendication 3, dans lequel le microphone (12) est disposé du même côté de la carte (6) que le haut-parleur (3).
